Europäisches Patentamt

European Patent Office

Office européen des brevets

(11) Numéro de publication : **0 305 234 B1**

# FASCICULE DE BREVET EUROPEEN

(45) Date de publication du fascicule du brevet :
02.01.92 Bulletin 92/01

(51) Int. Cl.⁵ : **C09D 5/24**

(21) Numéro de dépôt : **88401873.0**

(22) Date de dépôt : **20.07.88**

(54) Peintures ionisables utiles notamment comme peintures anti-foudre.

(30) Priorité : **24.07.87 FR 8710536**

(43) Date de publication de la demande :
**01.03.89 Bulletin 89/09**

(45) Mention de la délivrance du brevet :
**02.01.92 Bulletin 92/01**

(84) Etats contractants désignés :
**AT BE CH DE ES FR GB GR IT LI LU NL SE**

(56) Documents cités :
**DE-A- 3 223 484**
**FR-A- 1 460 218**
**US-A- 3 728 205**
**PATENT ABSTRACTS OF JAPAN, vol. 9, no.**
**287 (C-314)[2010], 14 novembre 1985**

(73) Titulaire : **CENTRE NATIONAL D'ETUDES**
**SPATIALES**
**2, Place Maurice Quentin**
**F-75001 Paris (FR)**

(72) Inventeur : **Guillaumon, Jean-Claude**
**Chemin de Pouze**
**F-31450 Ayguesvives (FR)**
Inventeur : **Blet, Louis Joseph Clément**
**11 Allées des Violettes**
**F-31520 Romonville Saint Agne (FR)**

(74) Mandataire : **Colas, Jean-Pierre et al**
**Cabinet de Boisse 37, avenue Franklin D.**
**Roosevelt**
**F-75008 Paris (FR)**

## Description

L'invention concerne l'utilisation d'une peinture ionisable permettant de diffuser les forts courants électriques, par exemple ceux dus à la foudre, pour la protection des parties de lanceurs ou d'aéronefs susceptibles d'être frappées par la foudre.

Les matériaux diélectriques (composites : époxydes/fibres de carbone, époxydes/fibres de verre, époxydes/fibres d'aramides, etc...) de plus en plus utilisés sur lanceurs ou aéronefs, ne permettent pas d'écouler les très forts courants de foudroiement et sont partiellement ou totalement détruits ainsi que les câblages électriques se situant à proximité.

Les solutions actuellement connues pour se protéger de la foudre consistent en la pose de treillis métalliques qui sont collés à la surface des diélectriques ou de bandes adhésives conductrices ; par-dessus, on applique ensuite une peinture de finition.

Ces solutions ont pour inconvénients majeurs d'être difficiles à mettre en oeuvre et, d'autre part, d'être d'un coût élevé.

Par ailleurs, DE-A-3223484 décrit une peinture antistatique lavable pour aéronefs comprenant un polymère (acrylique), un alkylbenzènesulfonate, un ester phosphorique, un solvant et un savon métallique.

De son côté, FR-A-1460218 décrit une composition de revêtement antistatique pour feuille de matière plastique comprenant, en milieu aqueux, un polymère hydrophile et un sulfonate de métal alcalin d'un produit de condensation naphtalène-formaldéhyde.

Enfin, US-A-3728205 enseigne une composition antistatique, en particulier, pour tapis ou moquette, à base d'un polymère organique contenant des sels de métaux alcalins d'acides mono-, di- ou poly-carboxyliques.

Aucun de ces documents antérieurs ne concerne une peinture destinée à protéger un substrat contre les effets de la foudre.

Il serait donc avantageux de disposer d'une peinture ou composition de revêtement ayant une fonction de protection contre la foudre.

La Demanderesse a maintenant trouvé que certaines peintures ou compositions de revêtement ionisables permettent d'écouler les très forts courants de foudroiement.

Plus particulièrement, l'invention concerne l'utilisation, pour protéger un substrat contre les effets de la foudre, d'une peinture comprenant un liant filmogène et un pigment, ledit pigment comprenant au moins un sel de métal alcalin ou de métal alcalino-terreux, ayant un potentiel de première ionisation compris entre 3,89 et 6,2 volts, d'un acide organique mono- ou polyfonctionnel, d'acide carbonique ou d'un polymère à fonction acide, ledit sel étant présent en quantité suffisante pour rendre la peinture ionisable sous l'action d'un fort courant électrique.

A l'heure actuelle, on préfère employer des sels de césium ou de baryum, comme pigment.

Les pigments utiles dans l'invention ont une température de décomposition de l'ordre de 200 à 600°C environ, et libèrent des ions qui permettent de diffuser les courants électriques dus à la foudre, à la surface de la peinture, assurant ainsi une protection des matériaux diélectriques sous-jacents.

Comme acides organiques, on peut utiliser, par exemple, l'acide oxalique, tartrique, citrique, malonique, maléique, etc...

Comme polymères à fonction acide, on peut utiliser tous polymères à groupes carboxyle et/ou sulfonyle. Des résines échangeuses d'ions se sont révélées particulièrement appropriées. Les peintures utiles, dans l'invention peuvent s'appliquer en une ou plusieurs couches sur les substrats à peindre.

On peut utiliser n'importe quel liant comme étant utile pour la formation de peintures. On peut citer, à titre d'exemples non limitatifs, des polyuréthanes, des résines époxydes, des résines acryliques, des résines glycérophtaliques, des résines silicones, etc...

L'homme de l'art pourra trouver dans l'abondante littérature publiée à ce sujet de nombreux types de liants utilisables. Outre les pigments ionisables et le liant, les peintures utiles dans l'invention peuvent comprendre des pigments classiques blancs ou colorés, par exemple le dioxyde de titane, l'oxyde de zinc, l'oxyde d'étain, l'orthotitanate de zinc, l'oxyde de fer, l'oxyde de chrome, etc...

Le pourcentage, en poids, de pigment ionisable par rapport au poids total des pigments peut être compris entre 20 et 100%.

D'autre part, le rapport en poids de pigments totaux/liant sera habituellement dans la gamme de 0,7 à 4, bien que ces valeurs ne soient pas étroitement critiques.

La peinture utile dans l'invention peut contenir aussi un ou plusieurs solvants, tels que, par exemple, des hydrocarbures aromatiques, des hydrocarbures aliphatiques, des cétones, des esters, des éthers de glycol, etc... La peinture peut également être mise sous la forme d'une émulsion ou dispersion aqueuse. La proportion de solvant sera habituellement comprise dans la gamme de 0 à 60% en poids par rapport au poids total de la peinture.

Bien entendu, les peintures utiles dans l'invention peuvent comprendre également tous adjuvants désirés communément employés dans les formulations de peintures.

L'application des couches de peinture utile dans l'invention sur un substrat peut s'effectuer au pistolet à peinture, à la brosse ou par toute autre technique connue.

Les peintures utiles dans l'invention peuvent être appliquées sur toutes sortes de substrats tels que les métaux ou des matériaux composites. A titre de substrats convenables on peut citer : les composites époxydes-fibres de verre, les composites époxyde-fibres de carbone, les composites époxyde-fibres d'aramide, les alliages métalliques.

Si désiré ou nécessaire, on peut appliquer une couche de primaire phosphatant, ou toute autre couche de primaire ou d'apprêt avant d'appliquer les peintures de l'invention.

Outre son utilisation sur lanceurs ou aéronefs en vue de les protéger contre la foudre, les peintures utiles dans l'invention peuvent être utiles dans d'autres industries ou d'autres domaines, par exemple en électronique.

Les exemples non limitatifs suivants sont donnés en vue d'illustrer l'invention.

EXEMPLE 1

On obtient une peinture anti-foudre dont l'épaisseur après séchage est comprise entre 15 et 100 micromètres, en appliquant sur un substrat une peinture préparée par le mode opératoire suivant :

A 102,8 g de liant polyuréthanne DESMOPHEN 651 (vendu par la Société BAYER), on ajoute 18 g d'acétate d'éthylèneglycol et 52 g d'acétate d'éthyle dans un disperseur vertical, puis on ajoute 62 g de tartrate acide de césium, 62 g de dioxyde de titane et 0,6 g de silice de diatomées à la solution obtenue et on disperse encore pendant 10 minutes. La silice de diatomées est un agent anti-déposition évitant la formation d'agglomérats de pigments au cours du stockage de la peinture.

On broie la pâte obtenue dans un broyeur à billes RED DEVIL pendant 30 minutes. On sépare la composition obtenue des billes par tamisage. On incorpore 82,25 g de durcisseur DESMODUR N75 à la composition résultante juste avant application de celle-ci.

Le rapport pigments/liant (P/L) est de 1.

Les essais de foudroiement de cette peinture appliquée sur composite époxy-fibres de verre ont montré un bon comportement de celle-ci.

Ces essais ont été conduits suivant la norme militaire américaine M/L STD1275 A et suivant la recommandation de l'aviation civile américaine : AC 2053 A.

Lors de ces essais, la foudre avait deux composantes :
— l'une A de caractéristiques : Intensité : 200 kA avec un flux de $2 \times 10^6$ $A^2$/s ;
— l'autre C* : courant de 20 coulombs avec une intensité maximale de 400A.

Le mode de préparation des compositions de peintures des exemples suivants se fait de façon similaire à celui décrit ci-dessus, à l'exception des modifications indiquées concernant les ingrédients employés.

EXEMPLE 2

On obtient une peinture anti-foudre dont l'épaisseur après séchage est comprise entre 15 et 100 micromètres, en appliquant sur un substrat une peinture dont la composition est la suivante :
— liant polyuréthanne DESMOPHEN 651 (102,8 g) et durcisseur DESMODUR N75 (82,25 g) produits par BAYER ;
— pigment : mélange d'oxalate de baryum (62 g), de dioxyde de titane (62 g) et de silice de diatomées (0,7 g) ;
— solvants : mélange d'acétates de l'exemple 1. Le rapport P/L est de 1.

Les essais de foudroiement de cette peinture appliquée sur composite époxy-fibres de verre ont montré un bon comportement de celle-ci.

EXEMPLE 3

On obtient une peinture anti-foudre dont l'épaisseur après séchage est comprise entre 15 et 100 micromètres, en appliquant sur un substrat une peinture dont la composition est la suivante :
— liant polyuréthanne DEMOSPHEN 651 (102,8 g) et durcisseur DESMODUR N75 (82,25 g) produits par BAYER ;
— pigment : DOWEX W50 × 8 (résine échangeuse d'ions) traité par le nitrate de césium (44 g), oxyde d'étain (80 g) et silice de diatomées (0,6 g). Le rapport P/L est de 1.

Les essais de foudroiement de cette peinture appliquée sur composite époxy-fibres de verre ont montré un bon comportement de celle-ci.

EXEMPLE 4

On obtient une peinture anti-foudre dont l'épaisseur après séchage est comprise entre 15 et 100 micromètres, en appliquant sur un substrat une peinture dont la composition est la suivante :
— liant polyuréthanne DESMOPHEN 651 (102,8 g) et durcisseur DESMODUR N75 (82,25 g) produits par BAYER ;
— pigment : DOWEX W50 X 8 (résine échangeuse d'ions) traité par l'hydroxye de baryum (44 g), oxyde d'étain (80 g) et silice de diatomées (0,6 g) ;
— solvants : mélange d'acétates de l'exemple 1. Le rapport P/L est égal à 1.

Les essais de foudroiement de cette peinture appliquée sur composite époxy-fibres de verre ont montré un bon comportement de celle-ci.

EXEMPLE 5

On obtient une peinture anti-foudre dont l'épaisseur après séchage est comprise entre 15 et 100 micromètres, en appliquant sur un substrat une peinture dont la composition est la suivante :

— liant polyuréthanne DESMOPHEN 651 (102,8g) et durcisseur DESMODUR N75 (82,25 g) produits par BAYER ;

— pigment : mélange de tartrate de césium (31g), d'oxalate de baryum (31 g), de dioxyde de titane (62 g) et de silice de diatomées (0,7 g) ;

— solvants : mélange d'acétates de l'exemple 1. Le rapport P/L est égal à 1.

Les essais de foudroiement de cette peinture appliquée sur composite époxy-fibres de verre ont montré un bon comportement de celle-ci.

EXEMPLE 6

On obtient une peinture anti-foudre dont l'épaisseur après séchage est comprise entre 15 et 100 micromètres, en appliquant sur un substrat une peinture dont la composition est la suivante :

— liant polyuréthane DESMOPHEN 651 (102,8g) et durcisseur DESMODUR N75 (82,25 g) produits par BAYER ;

— pigment : mélange de tartrate de césium (15,5g), d'oxalate de baryum (46,5 g), de dioxyde de titane (62 g) et de silice de diatomées (0,7 g);

— solvants : mélange d'acétates de l'exemple 1. Le rapport P/L est égal à 1.

Les essais de foudroiement de cette peinture appliquée sur composite époxy-fibres de verre ont montré un bon comportement de celle-ci.

EXEMPLE 7

On obtient une peinture anti-foudre dont l'épaisseur après séchage est comprise entre 15 et 100 micromètres, en appliquant sur un substrat une peinture dont la composition est la suivante :

— liant polyuréthanne DESMOPHEN 651 (51,4g) et durcisseur DESMODUR N75 (41,1 g) produits par BAYER ;

— pigment : mélange de tartrate de césium (62 g), de dioxyde de titane (62 g) et de silice de diatomées (0,7 g) ;

— mélange d'acétates de l'exemple 1. Le rapport P/L est égal à 2.

Les essais de foudroiement de cette peinture appliquée sur composite époxy-fibres de verre ont montré un bon comportement de celle-ci.

EXEMPLE 8

On obtient une peinture anti-foudre dont l'épaisseur après séchage est comprise entre 15 et 100 micromètres, en appliquant sur un substrat une peinture dont la composition est la suivante :

— liant polyuréthanne DESMOPHEN 651 (51,4g) et durcisseur DESMODUR N75 (41,1 g) produits par BAYER ;

— pigment : mélange d'oxalate de baryum (62 g), de dioxyde de titane (62 g) et de silice de diatomées (0,7 g) ;

— solvants : mélange d'acétates de l'exemple 1. Le rapport P/L est de 2.

Les essais de foudroiement de cette peinture appliquée sur composite époxy-fibres de verre ont montré un bon comportement de celle-ci.

## Revendications

1. L'utilisation, pour protéger un substrat contre les effets de la foudre, d'une peinture comprenant un liant filmogène et un pigment, ledit pigment comprenant au moins un sel de métal alcalin ou de métal alcalino-terreux, ayant un potentiel de première ionisation compris entre 3,89 et 6,2 volts, d'un acide organique mono- ou polyfonctionnel, d'acide carbonique ou d'un polymère à fonction acide, ledit sel étant présent en quantité suffisante pour rendre la peinture ionisable sous l'action d'un fort courant électrique.

2. L'utilisation selon la revendication 1, caractérisée en ce que ledit sel est un sel de césium ou de baryum.

3. L'utilisation selon la revendication 2, caractérisée en ce que ledit sel est choisi parmi le tartrate acide de césium, l'oxalate de baryum, une résine échangeuse d'ions acide ayant subi un échange par des ions césium ou baryum, le tartrate de césium, et leurs mélanges.

4. L'utilisation l'une quelconque des revendications 1 à 3, caractérisée en ce que ledit pigment est un mélange dudit sel de métal et d'un pigment classique pour peintures.

5. L'utilisation selon l'une quelconque des revendications 1 à 4, caractérisée en ce que ledit sel ionisable constitue 20 à 100% en poids du total de pigments présents.

6. L'utilisation selon l'une quelconque des revendications 1 à 5, caractérisée en ce que le rapport en poids pigments totaux/liant est compris entre 0,7 et 4.

7. L'utilisation selon l'une quelconque des revendications 1 à 6, caractérisée en ce que ladite peinture contient aussi un solvant à raison de 0 à 60% en poids par rapport au poids total de la peinture.

## Patentansprüche

1. Verwendung eines Anstrichmittels, enthaltend ein filmbildendes Bindemittel und ein Pigment, das mindestens ein Salz eines Alkali- oder Erdalkimetalls einer organischen mono- oder polyfunktionellen Säure, der Carbonsäure oder eines Polymers mit saurer Funktion enthält, wobei das Alkali- oder Erdalkalimetall ein Potential der ersten Ionisation zwischen 3,89 und 6,2 V aufweist und das genannte Salz in einer Menge vorliegt, die ausreicht, um das Anstrichmittel unter der Wirkung eines starken elektrischen Stroms ionisierbar zu machen, zum Schützen eines Substrats gegen die Wirkungen eines Blitzes.

2. Verwendung nach Anspruch 1, dadurch gekennzeichnet, daß das Salz ein Cäsium- oder Bariumsalz ist.

3. Verwendung nach Anspruch 2, dadurch gekennzeichnet, daß das Salz aus saurem Cäsiumtartrat, Bariumoxalat, einem sauren Ionenaustauscherharz, das einem Austausch gegen Cäsium- oder Bariumionen unterworfen worden ist, Cäsiumtartrat oder einem Gemisch dieser Stoffe ausgewählt wurde.

4. Verwendung nach einem der Ansprüche 1 bis 3, dadurch gekennzeichnet, daß das genannte Pigment ein Gemisch aus dem genannten Metallsalz und einem klassischen Pigment für Anstrichstoffe ist.

5. Verwendung nach einem der Ansprüche 1 bis 4, dadurch gekennzeichnet, daß das genannte ionisierbare Salz 20 bis 100 Gew.-% der gesamten vorliegenden Pigmente ausmacht.

6. Verwendung nach einem der Ansprüche 1 bis 5, dadurch gekennzeichnet, daß das Gewichtsverhältnis aus den gesamten Pigmenten und dem Bindemittel zwischen 0,7 und 4 liegt.

7. Verwendung nach einem der Ansprüche 1 bis 6, dadurch gekennzeichnet, daß das genannte Anstrichmittel auch ein Lösungsmittel in einer Menge von 0 bis 60 Gew.-%, bezogen auf das Gesamtgewicht des Anstrichmittels, enthält.

**Claims**

1. Use, in order to protect a substrate from the effects of lightning, of a paint comprising a filmforming binder and a pigment, the said pigment comprising at least one alkali metal salt or alkaline earth metal salt with a first ionisation potential between 3.89 and 6.2 volts, of a mono- or polyfunctional organic acid, carbonic acid or a polymer having an acidic functional group, the said salt being present in an amount sufficient to render the paint ionisable under the action of a strong electric current.

2. Use according to Claim 1, characterised in that the said salt is a salt of caesium or barium.

3. Use according to Claim 2, characterised in that the said salt is selected from caesium hydrogen tartrate, barium oxalate, an acidic ion exchange resin having been subjected to an exchange using caesium or barium ions, caesium tartrate and mixtures thereof.

4. Use according to any of Claims 1 to 3, characterised in that the said pigment is a mixture of the said metal salt of a conventional paint pigment.

5. Use according to any of Claims 1 to 4, characterised in that the said ionisable salt represents 20 to 100% by weight of the total of the pigments present.

6. Use according to any of Claims 1 to 5, characterised in that the weight ratio of total pigments/binder is between 0.7 and 4.

7. Use according to any of Claims 1 to 6, characterised in that the said paint also contains 0 to 60% by weight of a solvent, relative to the total weight of the paint.